# FASCICULE DE BREVET EUROPEEN

(11) **EP 3 598 315 B1**
(45) Date de publication et mention de la délivrance du brevet: **28.12.2022**
(21) Numéro de dépôt: 19186868.6
(22) Date de dépôt: 17.07.2019
(51) Int. Cl.: G06F 13/28

(54) **ACCÈS DIRECT EN MÉMOIRE**
DIREKTER SPEICHERZUGANG
DIRECT MEMORY ACCESS

(30) Priorité: 19.07.2018 FR 1856705; 02.11.2018 FR 1871349
(43) Date de publication de la demande: 22.01.2020
(73) Titulaire: STMicroelectronics (Grenoble 2) SAS, 38000 Grenoble (FR); STMicroelectronics (Rousset) SAS, 13790 Rousset (FR)
(72) Inventeur: CLOUTE, François, 38500 COUBLEVIE (FR); LENDRE, Sandrine, 83910 POURRIERES (FR)
(74) Mandataire: Cabinet Beaumont

(56) Documents cités:
- WO-A2-01/29656
- US-A1- 2006 050 693
- US-A1- 2008 228 896

## Description

### Domaine technique

La présente description concerne de façon générale le domaine des systèmes électroniques, et plus particulièrement des systèmes électroniques dans lesquels des exécutions de tâches, par exemple des transferts de données par accès direct en mémoire (DMA - "Direct Memory Access"), sont paramétrées par une liste chaînée d'enregistrements stockée dans une mémoire.

### Technique antérieure

L'accès direct en mémoire est un procédé permettant, dans un système électronique, des transferts de données entre un périphérique et une mémoire, entre deux périphériques ou entre deux mémoires sans intervention d'une unité centrale de traitement (CPU - "Central Processing Unit") si ce n'est pour lancer et conclure le transfert.

L'accès direct en mémoire est généralement mis en oeuvre par un circuit de contrôle d'accès direct en mémoire. Pour effectuer un transfert de données, le circuit lit dans une mémoire un enregistrement d'une liste chaînée d'enregistrements ("Linked List Item" - LLI) afin d'obtenir les paramètres du transfert. Ces paramètres lus sont stockés temporairement dans un ensemble de registres, ou banque de registres, du circuit. Le circuit effectue ensuite le transfert en fonction des paramètres stockés.

Le document WO 01/29656 décrit une architecture de descripteurs de DMA à listes liées.

### Résumé de l'invention

La mémoire de l'invention est définie par la revendication 1 et des modes de réalisation particuliers de cette mémoire par les revendications dépendantes 2 à 5. Un procédé de transfert de données de l'invention est défini par la revendication 6 et des modes de réalisation particuliers de ce procédé par les revendications dépendantes 7 à 8. Un système électronique de l'invention est défini par la revendication 9.

### Brève description des dessins

Ces caractéristiques et avantages, ainsi que d'autres, seront exposés en détail dans la description suivante de modes de réalisation particuliers en relation avec les figures jointes parmi lesquelles :
la figure 1 représente, de façon très schématique et sous forme de blocs, un mode de réalisation d'un circuit électronique 1
la figure 2 est un organigramme illustrant, sous forme de blocs, un mode de réalisation d'un procédé de transfert de données par accès direct en mémoire ;
la figure 3 représente, schématiquement et sous forme de blocs, un mode de réalisation d'une banque de registres d'un circuit de contrôle d'accès direct en mémoire ;
la figure 4 représente schématiquement une mémoire contenant un mode de réalisation d'une liste chainée d'enregistrements pour programmer les registres de la figure 3 ;
la figure 5 est un organigramme illustrant plus en détail un mode de réalisation d'une étape du procédé de la figure 2 ;
la figure 6 illustre, schématiquement et sous forme de blocs, un autre mode de réalisation d'une banque de registres d'un circuit de contrôle d'accès direct en mémoire ;
la figure 7 est un organigramme illustrant un mode de réalisation d'un procédé de transfert de données par accès direct en mémoire ;
la figure 8 représente, schématiquement et sous forme de blocs, un exemple d'une banque de registres d'un circuit de contrôle d'accès direct en mémoire, selon le mode de réalisation de la figure 6 ;
la figure 9 représente, schématiquement et sous forme de blocs, une variante de réalisation de la banque de registres de la figure 8 ; et
la figure 10 représente, schématiquement et sous forme de blocs, un autre exemple d'une banque de registres d'un circuit de contrôle d'accès direct en mémoire, selon le mode de réalisation de la figure 6.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers paramètres couramment utilisés pour des transferts de données par accès direct en mémoire n'ont pas été détaillés, les modes de réalisation décrits étant compatibles avec ces paramètres usuels. En outre, les divers systèmes électroniques dans lesquels un contrôleur d'accès direct en mémoire est prévu n'ont pas été détaillés, les modes de réalisation décrits étant compatibles avec la plupart de ces systèmes électroniques usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

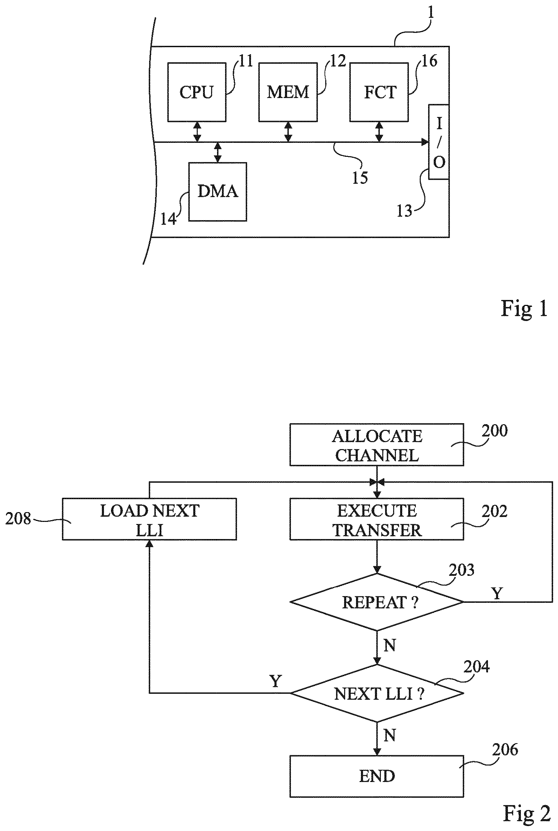

La figure 1 représente, de façon très schématique et sous forme de blocs, un mode de réalisation d'un circuit ou système électronique 1 du type auquel s'appliquent, à titre d'exemple, les modes de réalisation qui vont être décrits.

Le système électronique 1 comporte :
- une unité centrale de traitement 11 (CPU), par exemple une machine d'états, un microprocesseur, un circuit logique programmable, etc. ;
- une ou plusieurs mémoires parmi lesquelles au moins une mémoire vive 12 (MEM), par exemple de type SRAM ;
- au moins une interface d'entrée-sortie 13 (I/O) de communication, par exemple de type bus série, avec l'extérieur du système 1 ;
- un circuit de contrôle d'accès direct en mémoire 14 (DMA) ; et
- un ou plusieurs bus de données, d'adresses et/ou de commandes entre les différents éléments internes au système 1, représentés ici sous la forme d'un unique bus 15.

Par ailleurs, le système 1 peut intégrer d'autres fonctions, symbolisées par un bloc 16 (FCT), selon l'application, par exemple un processeur dédié au traitement d'images, d'autres interfaces, d'autres mémoires, etc.

Le système 1 est configuré pour exécuter diverses applications telles que du traitement d'images, de l'encodage et/ou du décodage vidéo, du traitement de données provenant d'un capteur, etc... Ces applications requièrent des transferts de données, par l'intermédiaire du bus 15, entre des éléments internes au système 1. Afin de fluidifier le fonctionnement du système 1 et de réduire la charge de l'unité centrale 11, ces transferts de données sont effectués par accès direct en mémoire, sous le contrôle du circuit 14. Dans ce mode de réalisation, le circuit 14 comprend plusieurs canaux de transfert de données. Chaque canal du circuit 14 permet de réaliser des transferts de données entre deux éléments (circuit et/ou mémoire) du système 1. Chaque canal est associé à une banque de registres stockant, pour chaque transfert de données sur le canal, les paramètres du transfert.

Lorsqu'une application doit être exécutée par le système 1, l'unité centrale 11 configure le circuit 14 de sorte que le circuit 14 réserve l'un de ces canaux à l'application. Tous les transferts de données de l'application s'effectuent alors via le canal réservé à l'application. Dans les modes de réalisation décrits, l'élément de source et/ou l'élément de destination des données à transférer peuvent changer pendant l'exécution de l'application.

La figure 2 est un organigramme illustrant, sous forme de blocs, un mode de réalisation d'un procédé de transfert de données par accès direct en mémoire. Plus particulièrement, la figure 2 illustre, pour une application donnée, un procédé de mises à jour successives d'une banque de registres associée à un canal du circuit 14 de la figure 1, à partir d'une liste chaînée d'enregistrements représentative des transferts de données de l'application.

A une étape initiale 200 (ALLOCATE CHANNEL), un canal est attribué à une application en programmant la banque de registres associée à ce canal avec les paramètres d'un premier transfert de données de cette application. Cette étape revient à indiquer au circuit 14 quelle liste chaînée d'enregistrements il doit utiliser pour paramétrer les transferts devant avoir lieu sur ce canal. Chaque enregistrement de la liste détermine l'adresse en mémoire de l'enregistrement suivant. Chaque enregistrement détermine en outre les paramètres d'un transfert de données correspondant, par exemple l'indication que le transfert concerne des données ou des blocs de données, l'adresse de début d'une plage d'adresses d'une source où sont stockés les données ou les blocs de données à transférer, l'adresse de début d'une plage d'adresses d'une destination où doivent être copiés les données ou les blocs de données transférés, le nombre de données ou de blocs de données à transférer, la taille des données, le nombre de données par blocs, des décalages d'adresses entre deux données successives ou entre deux blocs successifs à transférer, etc. Chaque enregistrement peut donc correspondre au transfert d'une donnée, de plusieurs données, d'un bloc de données ou de plusieurs blocs entre une source et une destination.

Selon un mode de réalisation, à l'étape 200, la banque de registres est programmée en lisant en mémoire 12, à une adresse mémoire fournie par l'unité centrale 11, le premier enregistrement d'une liste et en programmant la banque de registres à partir de cet enregistrement.

Selon un autre mode de réalisation, à l'étape 200, la banque de registres est programmée directement, sans lecture d'un enregistrement en mémoire 12, par exemple à l'initialisation du système 1 ou par l'unité centrale 11. En particulier, l'adresse du premier enregistrement d'une liste est alors programmée dans la banque de registres.

Une fois que la banque de registres a été programmée pour attribuer le canal à l'application, l'unité centrale 11 indique au circuit 14 qu'il peut commencer à exécuter les transferts de données de l'application.

A une étape 202 suivante (EXECUTE TRANSFER), le circuit 14 effectue, sur le canal réservé à l'application, le transfert de données paramétré par le contenu de la banque de registres du canal, étant entendu que ce transfert peut concerner plusieurs données ou plusieurs blocs de données.

Un test 203 (REPEAT?) est ensuite réalisé pour déterminer, à partir du contenu de la banque de registres, si le transfert de données exécuté à l'étape 202 précédente, et dont les paramètres sont stockés dans la banque de registres, doit ou non être répété.

Si ce transfert doit être répété (sortie Y du bloc 203), le procédé se poursuit à l'étape 202. On comprend que, du fait que le contenu de la banque de registres n'est alors pas modifié, ce transfert est ensuite exécuté en boucle.

Si ce dernier transfert n'a pas à être répété (sortie N du bloc 203), le procédé se poursuit par un test 204 (NEXT LLI?). Ce test détermine, à partir du contenu courant de la banque de registres, s'il y a un enregistrement suivant dans la liste, autrement dit s'il reste au moins un transfert à effectuer pour cette application.

S'il n'y a pas d'enregistrement suivant dans la liste (sortie N du bloc 204), le test 204 est suivi d'une étape 206 (END) où le canal est libéré et peut ensuite être attribué à une nouvelle application.

S'il y a un enregistrement suivant (sortie Y du bloc 204), le test 204 est suivi d'une étape 208 (LOAD NEXT LLI) où cet enregistrement suivant est lu en mémoire 12 par le circuit 14 et la banque de registres est mise à jour avec les paramètres du transfert de données suivant de l'application. Le procédé se poursuit alors à l'étape 202.

On notera que l'ordre et/ou le nombre des étapes du procédé de la figure 2 peuvent être modifiés. En particulier, les tests 203 et 204 peuvent être effectués simultanément.

A titre d'exemple, on considère dans la suite de la description le cas où les transferts devant avoir lieu sur un canal ne s'effectuent pas au niveau bloc de données, mais uniquement au niveau donnée. On considère également que lorsqu'un transfert correspond au transfert de plusieurs données, ces données sont stockées les unes à la suite des autres dans une plage d'adresses de source et copiées les unes à la suite des autres dans une plage d'adresses de destination.

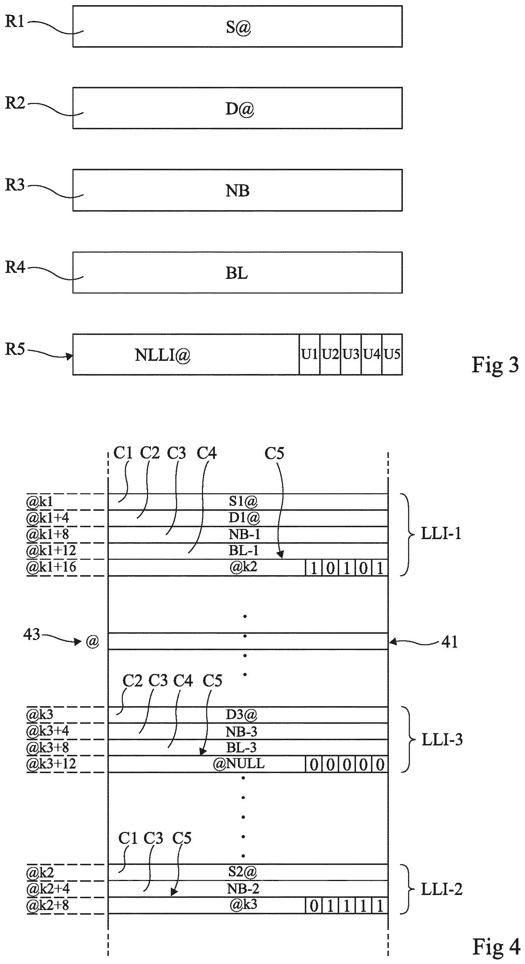

La figure 3 représente, schématiquement et sous forme de blocs, un mode de réalisation d'une banque de registres associée à un canal de transfert de données du circuit 14.

Dans cet exemple, la banque de registres comprend cinq registres R1, R2, R3, R4 et R5 permettant de stocker temporairement les paramètres d'un transfert de données. Les registres R1, R2, R3, R4 et R5 sont ici destinés à stocker respectivement l'adresse S@ de début d'une plage d'adresses d'une source des données à transférer, l'adresse D@ de début d'une plage d'adresses d'une destination des données à transférer, le nombre NB de données à transférer, la taille BL des données à transférer et l'adresse NLLI@ de l'enregistrement suivant dans la mémoire 12. Dans la suite de la description, on appelle registre de liste chaînée ou registre LLR (Linked List Register) le registre destiné à stocker les informations sur la liste chaînée d'enregistrements, et en particulier l'adresse NLLI@. De préférence, le registre LLR est le dernier registre de la banque de registres, dans cet exemple le registre R5.

Dans ce mode de réalisation, un des registres, de préférence le registre LLR, est également destiné à stocker des informations sur l'enregistrement suivant de la liste. Ces informations déterminent le nombre de champs de l'enregistrement suivant de la liste. Chaque champ d'un enregistrement est par exemple représentatif d'un contenu à programmer dans un registre correspondant, lors de la mise à jour suivante de la banque de registres. De préférence, chaque champ est directement recopié dans un registre correspondant lors de cette mise à jour. Les informations sur l'enregistrement suivant de la liste déterminent en outre à quel registre est affecté chaque champ de l'enregistrement suivant. Ces informations sont stockées par des bits du registre LLR R5, par exemple cinq bits U1, U2, U3, U4 et U5. Dans ce mode de réalisation, les bits U1, U2, U3, U4 et U5 sont affectés respectivement aux registres R1, R2, R3, R4 et R5, la valeur de chaque bit U1, U2, U3, U4, U5 déterminant si l'enregistrement suivant comprend un champ représentatif d'un contenu à programmer dans le registre, respectivement R1, R2, R3, R4, R5. Par exemple, si le bit U1 est à une première valeur binaire, par exemple '1', l'enregistrement suivant comprend un champ représentatif d'un contenu à programmer dans le registre R1, et si le bit est à la deuxième valeur binaire, par exemple '0', l'enregistrement suivant ne comprend pas de tel champ.

A titre d'exemple, le test 203 décrit en relation avec la figure 2 consiste à vérifier si tous les bits U1 à U5 sont à '0' et si l'adresse @NLLI n'est pas nulle. Si c'est le cas, cela signifie que la banque de registres ne doit pas être mise à jour et que le dernier transfert exécuté doit être répété.

A titre d'exemple encore, le test 204 décrit en relation avec la figure 2 consiste à vérifier si l'adresse @NLLI est nulle. Si c'est le cas, cela signifie qu'il n'y a pas d'enregistrement suivant et que tous les transferts de l'application ont été effectués.

On notera que les informations relatives au nombre de champs de l'enregistrement suivant et au registre auquel est affecté chacun de ces champs, l'indication selon laquelle un transfert doit être répété et/ou l'indication selon laquelle la liste ne contient plus d'enregistrement suivant peuvent être représentées sous une forme différente de celle décrite ci-dessus à titre d'exemple.

La figure 4 représente schématiquement une mémoire, par exemple la mémoire 12 de la figure 1, contenant un mode de réalisation d'une liste chaînée d'enregistrements pour programmer les registres de la figure 3.

La mémoire 12 est divisée en plusieurs mots mémoire 41 de taille fixe, par exemple 4 octets, étant chacun associé à une adresse 43 de la mémoire. La mémoire 12 contient une liste chaînée d'enregistrements constituée, dans cet exemple, de trois enregistrements LLI-1, LLI-2 et LLI-3. Les champs d'un même enregistrement sont enregistrés les uns à la suite des autres dans la mémoire 12, ici à partir de l'adresse en mémoire du premier champ de cet enregistrement. Dans cet exemple, chaque champ occupe un mot mémoire 41. En variante, chaque champ peut nécessiter plus d'un mot mémoire pour son stockage mémoire ou un mot mémoire peut contenir plus d'un champ. De préférence, les champs de chaque enregistrement se succèdent dans le même ordre que les registres correspondants de la banque de registres. Dans cet exemple, l'adresse en mémoire d'un enregistrement correspond à l'adresse à laquelle est enregistré le premier champ de cet enregistrement.

Dans cet exemple, on considère le cas où, à l'étape 200 de la figure 2, la banque de registres est programmée à partir du premier enregistrement LLI-1 de la liste. Comme cela est illustré en figure 4, ce premier enregistrement LLI-1 comprend alors autant de champs qu'il y a de registres, cinq dans cet exemple, de sorte que chaque registre puisse être programmé avec un champ de l'enregistrement. Plus particulièrement, l'enregistrement LLI-1 comprend des champs successifs C1, C2, C3, C4 et C5 représentatifs d'un contenu à programmer dans les registres respectivement R1, R2, R3, R4 et R5. Dans cet exemple, les champs C1, C2, C3 et C4 de l'enregistrement LLI-1 sont représentatifs respectivement d'une adresse S1@, d'une adresse D1@, d'un nombre NB-1 et d'une taille BL-1. Le champ C5 de l'enregistrement est représentatif de l'adresse @k2 de l'enregistrement suivant LLI-2 dans la mémoire 12, et d'informations sur cet enregistrement suivant LLI-2. Dans cet exemple, les informations relatives à l'enregistrement suivant sont sous la forme de cinq bits de valeurs '1', '0', '1', '0' et '1' correspondant respectivement aux bits U1, U2, U3, U4 et U5 du registre R5. Dans cet exemple, le premier champ C1 de l'enregistrement LLI-1 est enregistré dans le mot mémoire d'adresse @k1 et les champs suivants C2, C3, C4 et C5 sont enregistrés dans les mots mémoire suivants d'adresses respectives @k1+4, @k1+8, @k1+12 et @k1+16, chaque mot mémoire occupant ici quatre octets.

Le deuxième enregistrement LLI-2 comprend des champs successifs C1, C3 et C5 représentatifs d'un contenu à programmer dans les registres respectivement R1, R3 et R5. Les champs C1 et C2 sont représentatifs respectivement d'une adresse S2@ et d'un nombre NB-2, le champ C5 étant représentatif de l'adresse @k3 de l'enregistrement suivant LLI-3 et de cinq bits de valeurs '0', '1', '1', '1' et '1' correspondant respectivement aux bits U1, U2, U3, U4 et U5 du registre R5. Dans cet exemple, le premier champ C1 de l'enregistrement LLI-2 est enregistré dans le mot mémoire d'adresse @k2 et les champs suivants C3 et C5 sont enregistrés dans les mots mémoire suivants d'adresses respectives @k2+4 et @k2+8.

Le troisième enregistrement LLI-3 comprend des champs successifs C2, C3, C4 et C5 représentatifs d'un contenu à programmer dans les registres respectivement R2, R3, R4 et R5. Les champs C2, C3 et C4 sont représentatifs respectivement d'une adresse D3@, d'un nombre NB-3 et d'une taille BL-3. Dans l'exemple représenté, le champ C5 est représentatif d'une adresse nulle @NULL et de cinq bits U1 à U5 de valeur '0', ce qui indique que l'enregistrement LLI-3 est le dernier de la liste et que le transfert correspondant à cet enregistrement n'a pas à être répété. Dans cet exemple, le premier champ C2 de l'enregistrement LLI-3 est enregistré dans le mot mémoire d'adresse @k3 et les champs suivants C3, C4 et C5 sont enregistrés dans les mots mémoire suivants d'adresses respectives @k3+4, @k3+8 et @k3+12.

Dans la liste décrite ci-dessus, au moins certains enregistrements stockés dans la mémoire contiennent un nombre de champs inférieur au nombre de registres de la banque de registres mise à jour à partir de ces enregistrements. Ainsi, la capacité de stockage de la mémoire 12 peut être réduite par rapport à celle d'une mémoire dans laquelle chaque enregistrement d'une liste chaînée aurait autant de champs qu'il y a de registres dans la banque de registres. La diminution de la capacité de stockage de la mémoire 12 entraîne une diminution de sa surface et de sa consommation statique.

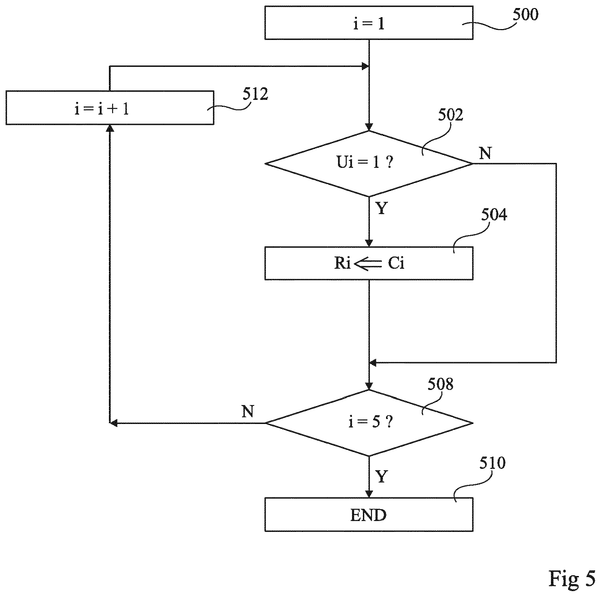

La figure 5 illustre, sous la forme d'un organigramme, l'étape 208 du procédé de la figure 2 décrite ci-dessus, c'est-à-dire la mise à jour de la banque de registres à partir d'un enregistrement d'une liste chaînée d'enregistrements stockée en mémoire.

A une étape d'initialisation 500 (i=1), une variable de boucle i, avec i entier, est initialisée, à 1 dans cet exemple.

A une étape de test 502 suivante (Ui=1 ?), le circuit 14 teste la valeur courante du bit Ui du registre LLR R5 pour déterminer si l'enregistrement suivant contient un champ Ci représentatif d'un contenu à programmer dans le registre Ri.

Si, lors du test 502, la valeur courante du bit Ui du registre LLR R5 est '1' (sortie Y du bloc 502), cela signifie que l'enregistrement suivant comprend un champ Ci représentatif d'un contenu à programmer dans le registre Ri. Le test est alors suivi d'une étape 504 (Ri<=Ci) de programmation du registre Ri avec ce contenu. L'étape 504 est suivie d'un test 508 (i=5 ?) au cours duquel on vérifie si la valeur courante de chaque bit Ui du registre R5 a été testée. Si c'est le cas (sortie Y du bloc 508), la mise à jour de la banque de registres à partir de l'enregistrement suivant est terminée (bloc END, 510). Sinon (sortie N du bloc 508), le procédé se poursuit à une étape 512 (i=i+1) où la variable i est incrémentée, puis le procédé reboucle sur l'étape 502.

Si, lors du test 502, la valeur courante du bit Ui du registre LLR R5 est '0' (sortie N du bloc 502), cela signifie que l'enregistrement suivant ne comprend pas de champ Ci représentatif d'un contenu à programmer dans le registre Ri. Le procédé se poursuit alors directement à l'étape 508 et le contenu du registre Ri est laissé inchangé.

Le procédé décrit ci-dessus permet, lorsque la banque de registres associée à un canal est mise à jour à partir d'un enregistrement d'une liste chaînée du type décrit en figure 4, de ne mettre à jour que certains registres de cette banque de registres, de préférence uniquement les registres dont le contenu est modifié entre deux transferts successifs. Il en résulte une réduction du nombre d'accès à la mémoire 12 par rapport au cas où tous les registres de la banque seraient mis à jour. Cette diminution du nombre d'accès en mémoire 12 entraîne une diminution de la consommation dynamique de la mémoire 12, et plus généralement du système 1 de la figure 1. On tire ici profit du fait que deux transferts de données successifs sur un canal réservé à une application ont généralement certains paramètres identiques.

On notera que l'ordre et/ou le nombre des étapes du procédé ci-dessus peuvent être modifiés. Par exemple, tous les bits Ui peuvent d'abord être lus, puis toutes les mises à jour des registres sont effectuées en fonction des valeurs des bits lus.

En outre, les modes de réalisation décrits en relation avec les figures 1 à 5 s'appliquent à des banques de registres d'autres circuits qu'un contrôleur d'accès direct en mémoire, pour paramétrer l'exécution d'une tâche par ce circuit.

Dans les modes de réalisation décrits ci-dessus, comme c'est généralement le cas dans un circuit de contrôle d'accès direct en mémoire, une fois qu'un canal a été attribué à une application (étape 200, figure 2) et que l'unité centrale 11 a autorisé le circuit 14 à exécuter les transferts de cette application, le circuit 14 effectue tous ces transferts de manière autonome, sans intervention de l'unité centrale 11. Une fois que tous les transferts ont été réalisés, le circuit 14 prévient l'unité centrale 11 qui peut alors attribuer ce canal à une autre application. Ainsi, une synchronisation entre deux applications, exécutées sur deux canaux différents du circuit 14, ne peut être effectuée que par l'unité centrale 11, soit au début de l'exécution d'une des deux applications, soit à la fin de l'exécution d'une des deux applications, quand tous les enregistrements correspondant aux transferts de données de cette application ont été lus et les transferts correspondants effectués.

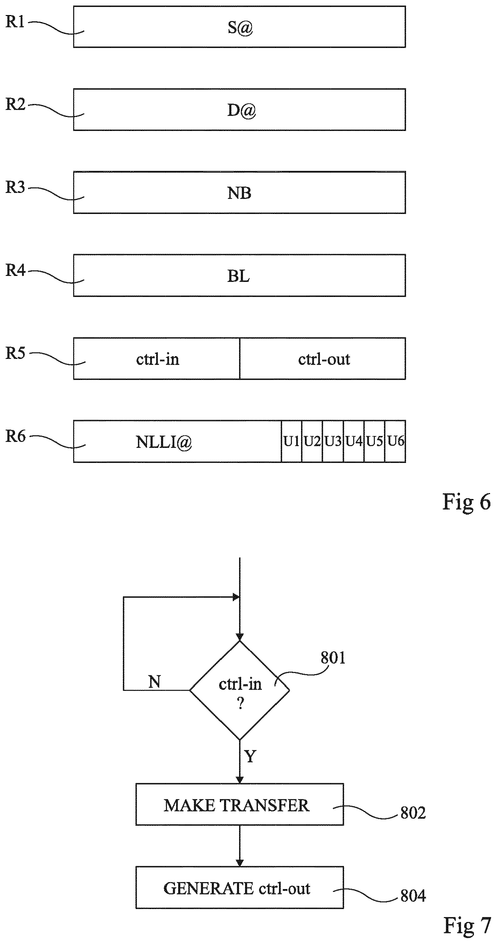

La figure 6 représente, schématiquement et sous forme de blocs, un exemple d'un autre mode de réalisation d'une banque de registres d'un canal de transfert de données du circuit 14.

La banque de registres de la figure 6 comprend ici six registres R1, R2, R3, R4, R5 et R6, les registres R1, R2, R3 et R4 de la figure 6 étant, dans cet exemple, similaires aux registres R1, R2, R3 et R4 de la figure 3. Le registre R5 est ici destiné à stocker une condition ctrl-in de début de transfert et un événement ctrl-out de fin de transfert. Le registre R6 constitue le registre de liste chaînée (LLR) de la banque de registres et est, comme en figure 3, destiné à stocker l'adresse NLLI@ d'un enregistrement suivant et les informations relatives à cet enregistrement suivant, notamment le nombre de champs de l'enregistrement et à quel registre est affecté chaque champ de l'enregistrement suivant. Ces informations sont ici stockées sous la forme de six bits U1, U2, U3, U4, U5 et U6 respectivement associés aux registres R1, R2, R3, R4, R5 et R6.

La mise à jour de la banque de registres de la figure 6 à partir d'un enregistrement d'une liste chaînée d'enregistrements s'effectue de manière similaire à ce qui a été décrit en relation avec les figures 1 à 5, les enregistrements de la liste étant adaptés en conséquence. En particulier, chaque enregistrement peut comprendre un champ supplémentaire C6 (non illustré) représentatif d'un contenu à programmer dans le registre R6. En outre, pour chaque enregistrement, le champ C6 de l'enregistrement peut alors comprendre six bits correspondant aux six bits U1 à U6 du registre R6.

Dans une variante de réalisation, la condition ctrl-in et l'événement ctrl-out sont stockés dans un des registres R1 à R4 et R6, la condition ctrl-in pouvant être stockée dans un autre registre que celui stockant l'événement ctrl-out. Cette variante est par exemple mise en oeuvre quand un ou plusieurs des registres R1 à R4 et R6 contiennent des bits inutilisés permettant alors de stocker ces informations ctrl-in et ctrl-out. Cela permet de supprimer le registre R5, le registre LLR R6 étant alors renuméroté R5.

La figure 7 est un organigramme illustrant un mode de réalisation d'un procédé de transfert de données par accès direct en mémoire. Plus particulièrement, la figure 7 illustre plus en détail l'étape 202 du procédé de la figure 2.

A une étape 801 (ctrl-in ?) mise en oeuvre par le circuit 14, tous les paramètres du transfert de données à exécuter sont stockés dans les registres de la banque de registres. L'étape 801 consiste en la détection de la condition ctrl-in de début de transfert, stockée dans le registre R5 dans cet exemple. L'étape 801 est répétée (sortie N du bloc 801) tant que cette condition ctrl-in n'est pas détectée. Lorsque la condition ctrl-in est détectée (sortie Y du bloc 801), le procédé se poursuit à une étape 802 (MAKE TRANSFER) au cours de laquelle le transfert de données paramétré par le contenu de la banque de registres est effectué, puis, une fois ce transfert terminé, par une étape 804 (GENERATE ctrl-out) au cours de laquelle l'événement ctrl-out est généré par le circuit 14.

Dans ce mode de réalisation, lorsqu'un événement ctrl-out est généré à la fin d'un premier transfert de données sur un premier canal réservé à une première application, et que la condition ctrl-in de début d'un deuxième transfert sur un deuxième canal réservé à une deuxième application correspond à la détection de cet événement ctrl-out, le deuxième transfert ne peut débuter qu'après la génération de l'événement ctrl-out du premier transfert. Ainsi, les premier et deuxième transferts, donc les première et deuxième applications, peuvent être synchronisés l'un par rapport à l'autre, directement au niveau du circuit 14, sans intervention de l'unité centrale 11 et alors que ces applications sont en train d'être exécutées. Plus généralement, la prévision d'une condition ctrl-in et d'un événement ctrl-out pour au moins certains transferts de données de plusieurs applications exécutées par le système 1 permet de synchroniser ces applications entre elles, sans recourir à l'unité centrale qui peut être mise en veille, voire éteinte, pendant l'exécution de ces applications.

Dans une variante de réalisation, on prévoit un paramètre supplémentaire indiquant à quel moment doit être détectée la condition ctrl-in lors d'un transfert de plusieurs données, par exemple avant le transfert de la première donnée ou avant le transfert de chaque donnée. De manière similaire, on prévoit un paramètre supplémentaire indiquant à quel moment doit être généré l'événement ctrl-out lors d'un transfert de plusieurs données, par exemple après le transfert de la dernière donnée ou après le transfert de chaque donnée. Les registres et les enregistrements de la liste sont alors adaptés pour intégrer ces paramètres supplémentaires. Le procédé de la figure 7 est également adapté en conséquence. Par exemple, lors d'un transfert de plusieurs données, si la condition ctrl-in est détectée avant chaque transfert d'une donnée et que l'événement ctrl-out est généré après chaque transfert d'une donnée, les étapes 801, 802 et 804 sont mises en oeuvre pour chaque donnée transférée, l'étape 802 correspondant alors au transfert de la donnée.

La prévision d'un ou plusieurs paramètres supplémentaires pour indiquer le ou les moments d'un transfert où une condition ctrl-in doit être détectée et le ou les moments où un événement ctrl-out doit être généré permet de contrôler la granularité à laquelle s'effectue la synchronisation entre des applications exécutées en parallèle par le système 1.

On notera que la condition ctrl-in d'un transfert sur un canal peut correspondre à la détection d'un événement autre qu'un événement ctrl-out généré lors d'un transfert sur un autre canal, par exemple à la détection d'un événement généré dans le système 1, par exemple issu du bloc 13 (I/O) du système 1.

A titre d'exemple, chaque condition ctrl-in peut correspondre à la détection d'un changement de niveau, par exemple le passage d'un niveau haut à un niveau bas ou inversement, d'un signal correspondant à cette condition. Chaque événement ctrl-out consiste par exemple à changer le niveau d'un signal correspondant à cet événement.

On notera que le mode de réalisation des figures 6 et 7 peut être mis en oeuvre sans les bits U1 à U6. Dans ce cas, comme il n'y a pas de mise à jour conditionnelle des registres, chaque enregistrement de la liste chaînée contient autant de champs qu'il y a de registres.

Dans des variantes de réalisation, les registres et les enregistrements décrits en relation avec les figures 3 à 7 peuvent intégrer un ou plusieurs paramètres supplémentaires de manière à gérer des transferts par blocs de données et/ou, dans une plage d'adresses de source et/ou de destination, des décalages d'adresses entre deux données ou deux blocs de données à transférer successifs.

En outre, dans le cas où les registres et les enregistrements sont adaptés de manière à gérer des transferts par blocs de données, on peut prévoir que, lors d'un transfert de plusieurs blocs de données, la condition ctrl-in soit détectée avant le transfert de chaque bloc et/ou que l'événement ctrl-out soit généré après le transfert de chaque bloc. Le ou les paramètres indiquant à quels moments détecter la condition ctrl-in et/ou générer l'événement ctrl-out seront alors adaptés en conséquence, de même que le procédé décrit en relation avec la figure 7.

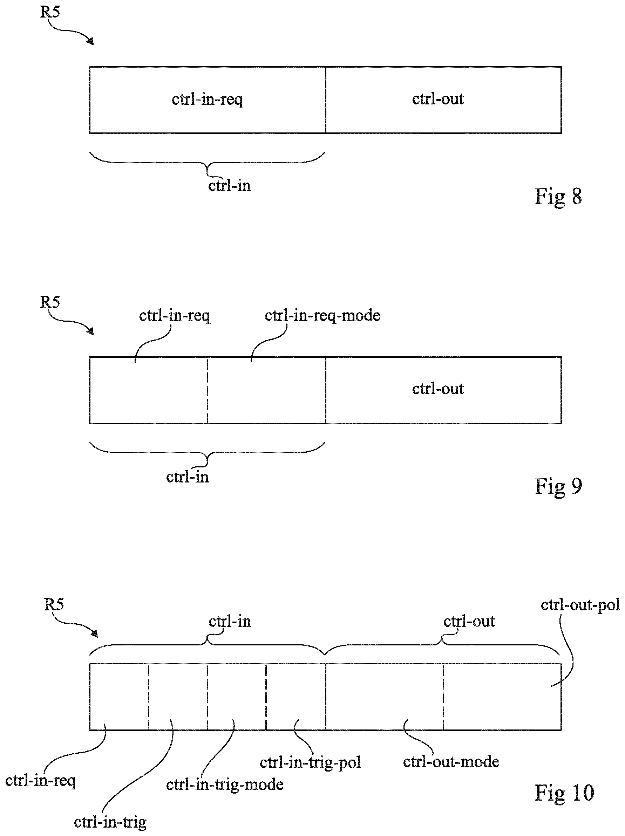

La figure 8 représente, schématiquement et sous forme de blocs, un exemple d'une banque de registres d'un circuit de contrôle d'accès direct en mémoire, selon le mode de réalisation de la figure 6. Dans cette figure 8, seul le registre R5 est représenté, les registres R1 à R4 et R6 étant par exemple identiques à ceux décrits en relation avec la figure 6.

Dans ce mode de réalisation, la condition ctrl-in décrite en relation avec la figure 6 comprend un paramètre ctrl-in-req représentatif de l'identification du client du transfert paramétré par le contenu des registres de la banque de registres associée au canal du transfert. Autrement dit, le paramètre ctrl-in-req est représentatif de l'identification de l'élément du système 1, par exemple le bloc fonctionnel 16 (FTC), qui demande le transfert de données. Ainsi, pour chaque transfert correspondant à un enregistrement d'une liste chaînée d'enregistrements, le client du transfert est associé de manière dynamique au canal sur lequel doit avoir lieu le transfert.

Plus précisément, l'identification du client d'un transfert revient à identifier quel est le signal de requête qui va provoquer ce transfert. Ainsi, lorsqu'un transfert de données a été paramétré en programmant, à partir d'un enregistrement correspondant d'une liste chaînée d'enregistrements, la banque de registres associée au canal du transfert, ce transfert ne peut débuter qu'après l'émission d'une requête par le client du transfert, ou, autrement dit, le début du transfert est conditionné par cette requête.

Dans ce mode de réalisation, le circuit 14 reçoit donc directement les requêtes d'accès en mémoire provenant des clients des transferts de données ayant lieu sur des canaux du circuit 14. Les requêtes sont traitées directement dans le circuit 14, le circuit 14 étant en mesure, sur la base des informations contenues dans les banques de registres associées aux canaux de transfert, de savoir à quel canal doit être transmis chaque requête, ou autrement dit, de savoir pour chaque requête quel est le canal sur lequel le début d'un transfert prévu est conditionné par la réception de cette requête.

En comparaison, dans des modes de réalisation dépourvus du paramètre ctrl-in-req, pour qu'un canal du circuit 14 connaisse le client d'un transfert sur ce canal, chaque client potentiel d'un transfert de données, c'est-à-dire chaque élément du système 1 susceptible de demander un transfert de données, est associé de manière statique, par exemple à l'initialisation du système 1, à au moins un canal donné du circuit 14, plusieurs clients pouvant être associés à un même canal. Le système 1 comprend alors, à l'extérieur du circuit DMA 14, un circuit de routage de requêtes configuré pour recevoir toutes les requêtes de transfert de données et pour transmettre, conformément à l'allocation statique client/canal, chaque requête reçue à chaque canal auquel est associé le client ayant émis la requête.

Les modes de réalisation comprenant le paramètre ctrl-in-req présentent des avantages par rapport à ceux qui en sont dépourvus.

En particulier, la prévision du paramètre ctrl-in-req permet d'éviter le recours à un circuit supplémentaire de routage des requêtes de transfert de données, d'où il résulte que le système 1 consomme moins et occupe une surface réduite par rapport au cas où un tel circuit de routage est prévu.

En outre, dans des modes de réalisation comprenant le paramètre ctrl-in-req, une application peut comprendre plusieurs clients, associés de manière dynamique au canal réservé par l'application. En revanche, dans des modes de réalisation sans le paramètre ctrl-in-req, une application ne peut comprendre qu'un seul client du fait de l'allocation statique client/canal. Cette différence, et les avantages qui en découlent, vont être illustrés plus en détail ci-après, en se référant à l'exemple d'exécution suivant où l'on considère que :
un premier client effectue des premiers transferts de données avec la mémoire 12, chaque premier transfert correspondant à une écriture, en mémoire, d'une donnée provenant du premier client ;
un deuxième client effectue des deuxièmes transferts de données avec la mémoire 12, chaque deuxième transfert correspondant à une lecture, par le deuxième client, d'une donnée stockée dans la mémoire ; et
après chaque écriture d'une donnée en mémoire lors d'un premier transfert, cette donnée est lue en mémoire lors d'un deuxième transfert, de sorte qu'un deuxième transfert ne peut avoir lieu qu'après un premier transfert correspondant.

Dans un mode de réalisation comprenant le paramètre ctrl-in-req, la mise en oeuvre de l'exemple d'exécution ci-dessus peut être faite au moyen d'une unique application comprenant les premiers et deuxièmes transferts, donc les premier et deuxième clients. Autrement dit, une même liste chaînée d'enregistrements peut être utilisée pour configurer les premiers et deuxièmes transferts sur un même canal. Plus précisément, un premier transfert est configuré en programmant les paramètres, et en particulier le paramètre ctrl-in-req, de ce premier transfert dans les registres de la banque de registres du canal. L'émission d'une requête par le premier client entraîne alors la mise en oeuvre de ce premier transfert sur ce canal, puis un deuxième transfert est configuré, sur ce même canal, en programmant les paramètres, et en particulier le paramètre ctrl-in-req, de ce deuxième transfert dans les registres de la banque de registres du canal. L'émission d'une requête par le deuxième client entraîne alors la mise en oeuvre de ce deuxième transfert sur ce canal. L'exécution se poursuit en répétant, pour ce canal, les étapes de programmation des registres avec les paramètres d'un premier transfert, de réception d'une requête du premier client, de mise en oeuvre du premier transfert sur le canal, de programmation des registres avec les paramètres d'un deuxième transfert, de réception d'une requête du deuxième client et de mise en oeuvre du deuxième transfert sur le canal.

En revanche, dans un mode de réalisation ne comprenant pas le paramètre ctrl-in-req, la mise en oeuvre de cet exemple d'exécution est faite au moyen d'une première application correspondant aux premiers transferts, c'est-à-dire au premier client, et d'une deuxième application correspondant aux deuxièmes transferts, donc au deuxième client. Autrement dit, une première liste chaînée d'enregistrements est utilisée pour configurer les premiers transferts sur un premier canal auquel le premier client est associé de manière statique, une deuxième liste chaînée d'enregistrements étant utilisée pour configurer les deuxièmes transferts sur un deuxième canal auquel le deuxième client est associé de manière statique. Il en résulte que, lors d'un premier transfert sur le premier canal, le deuxième canal est réservé par la deuxième application mais n'est pas utilisé.

On comprend de l'exemple d'exécution ci-dessus que la prévision du paramètre ctrl-in-req permet une association dynamique des clients à des canaux du circuit 14, d'où il résulte une diminution du temps où un canal est réservé mais n'est pas utilisé et/ou une diminution du nombre de canaux nécessaires. En particulier, la diminution du nombre de canaux de circuit 14 entraîne une diminution de la consommation et de la surface du circuit 14, et plus généralement du système 1.

La figure 9 représente, schématiquement et sous forme de blocs, une variante de réalisation de la banque de registres de la figure 8.

Dans cette variante, en plus du paramètre ctrl-in-req, la condition ctrl-in comprend un paramètre ctrl-in-req-mode indiquant, pour le transfert paramétré par le contenu de la banque de registres, au moins un moment du transfert où doit être reçue la requête du client identifié par le paramètre ctrl-in-req. Autrement dit, lorsque le transfert paramétré par le contenu de la banque de registres correspond à plusieurs transferts similaires, par exemple plusieurs transferts de données ou de blocs de données, le paramètre ctrl-in-req-mode indique lequel ou lesquels de ces transferts similaires sont conditionnés par la réception d'une requête en provenance du client du transfert. Par exemple, pour un transfert comprenant le transfert de plusieurs données ou de plusieurs blocs de données, le paramètre ctrl-in-req-mode indique qu'une requête du client doit être reçue avant chaque transfert de données, avant chaque transfert de blocs de données, ou uniquement avant le transfert de la première donnée ou du premier bloc de données. Dans ce dernier cas, les transferts de données ou de blocs de données suivant le transfert de la première donnée ou du premier bloc de données peuvent être réalisés sans qu'une requête n'ait été émise par le client du transfert.

On considère à titre d'exemple plusieurs transferts similaires, par exemple plusieurs transferts d'une donnée ou d'un bloc de données, ayant le même client, et, en outre, que chacun de ces transferts similaires ne doit débuter qu'une fois qu'une requête du client a été reçue par le circuit 14, ou, autrement dit, que chacun de ces transferts est conditionné par l'émission d'une requête par le client. La prévision du paramètre ctrl-in-req-mode permet que ces transferts similaires soient regroupés sous la forme d'un seul enregistrement d'une liste chaînée d'enregistrements, une seule mise à jour de la banque de registres associée au canal du transfert étant alors effectuée pour paramétrer l'ensemble de ces transferts similaires. Sans le paramètre ctrl-in-req-mode, il aurait fallu que chacun des transferts similaires corresponde à un enregistrement différent de la liste.

La variante de réalisation décrite en relation avec la figure 9 permet donc de réduire le nombre d'enregistrements d'une liste, ce qui peut permettre de diminuer la taille de la mémoire 12. Cette variante permet également de réduire le nombre d'accès à la mémoire 12 et de mises à jour des banques de registres associées aux canaux du circuit 14.

La figure 10 représente, schématiquement et sous forme de blocs, un autre exemple d'une banque de registres d'un circuit de contrôle d'accès direct en mémoire, selon le mode de réalisation de la figure 6. Dans cette figure 10, seul le registre R5 est représenté, les registres R1 à R4 et R6 étant par exemple identiques à ceux décrits en relation avec la figure 6.

Par rapport au mode de réalisation décrit en relation avec la figure 8, on prévoit que la condition ctrl-in de début de transfert comprenne, en plus du paramètre ctrl-in-req, un paramètre ctrl-in-trig représentatif d'une identification d'un signal conditionnant le début du transfert, un paramètre ctrl-in-trig-mode représentatif du ou des moments où doit être détectée une modification de ce signal, et un paramètre ctrl-in-trig-pol optionnel représentatif du type de modification, à savoir front montant, front descendant ou changement de niveau, du signal conditionnant le début du transfert. Autrement dit, lorsque le transfert paramétré par le contenu de la banque de registres correspond à plusieurs transferts similaires, par exemple plusieurs transferts de données ou de blocs de données, le paramètre ctrl-in-trig-mode indique lequel ou lesquels de ces transferts similaires sont conditionnés par la détection d'une modification du signal identifié par le paramètre ctrl-in-trig, le type (ou polarité) de cette modification étant ici indiqué par le paramètre ctrl-in-trig-pol. Par exemple, pour un transfert comprenant le transfert de plusieurs données ou de plusieurs blocs de données, le paramètre ctrl-in-trig-mode indique qu'une modification du signal identifié par le paramètre ctrl-in-trig doit être détectée avant chaque transfert de données, avant chaque transfert de blocs de données, ou uniquement avant le transfert de la première donnée ou du premier bloc de données. Par ailleurs, le paramètre ctrl-in-trig-mode peut également indiquer que, pour le transfert courant paramétré par le contenu de la banque de registres associée au canal du transfert, le transfert n'est pas conditionné par la détection d'une modification d'un signal identifié par le paramètre ctrl-in-trig.

Dans ce mode de réalisation, un transfert de données paramétré par le contenu de la banque de registres associée au canal du transfert ne peut débuter qu'après la réception de la requête du client du transfert par le circuit 14 et, le cas échéant, la détection, par le circuit 14, d'une modification du signal identifié par le paramètre ctrl-in-trig, le type de cette modification étant, dans cet exemple, indiqué par le paramètre ctrl-in-trig-pol. En outre, lorsque ce transfert correspond à plusieurs transferts similaires, le début de chacun de ces transferts similaires peut ou non être conditionné, conformément aux paramètres ctrl-in-trig-mode et/ou ctrl-in-req-mode, à la réception d'une requête provenant du client du transfert et/ou à la détection d'une modification d'un signal identifié par le paramètre ctrl-in-trig.

Dans ce mode de réalisation, on considère par ailleurs que, pour chaque canal, l'événement ctrl-out de fin de transfert est une modification d'un signal de fin de transfert associé à ce canal. L'événement ctrl-out comprend ici un paramètre ctrl-out-mode représentatif du ou des moments où le signal de fin de transfert du canal doit être modifié, et un paramètre ctrl-out-pol optionnel représentatif de la polarité de modification du signal, c'est-à-dire si l'événement de fin de transfert est un front montant, un front descendant ou un changement de niveau du signal de fin de transfert associé au canal considéré.

A titre d'exemple, le paramètre ctrl-out-mode indique que le moment où doit être générée la condition ctrl-out, c'est-à-dire le moment où doit être modifié le signal de fin de transfert associé au canal, est uniquement après le transfert de la dernière donnée ou du dernier bloc de données, après le transfert de chaque donnée ou de chaque bloc de données, ou à aucun moment de ce transfert.

A titre d'exemple, le signal identifié par le paramètre ctrl-in-trig peut être le signal de fin de transfert d'un canal ou tout autre signal interne du système 1, par exemple un signal d'événement fourni par un élément du système 1, par exemple un compteur du système 1.

La variante de réalisation décrite en relation avec la figure 9 s'applique à l'exemple de mode de réalisation décrit en relation avec la figure 10.

Dans d'autres variantes de réalisation, de la même façon qu'un paramètre ctrl-in-trig-pol peut être prévu pour indiquer quel est le type de modification du signal identifié par le paramètre ctrl-in-trig qui conditionne des transferts de données, un paramètre ctrl-in-req-pol peut être prévu pour indiquer quel type de modification d'un signal de requête constitue une requête de la part d'un client associé à ce signal de requête. De plus, chacun des paramètres ctrl-in-trig-pol et ctrl-in-req-pol peut être représentatif non seulement d'un type donné de modification (front montant, front descendant ou changement de niveau) mais également d'un niveau haut ou bas à détecter sur le signal ou la requête correspondante. On notera que, en l'absence du paramètre ctrl-in-trig-pol et/ou du paramètre ctrl-in-req-pol, la polarité peut être définie par défaut.

Dans d'autres variantes de réalisation non détaillées, certains des paramètres ctrl-in-trig, ctrl-in-trig-mode, ctrl-in-trig-pol, ctrl-in-req, ctrl-in-req-mode, ctrl-in-req-pol, ctrl-out-mode et ctrl-out-pol peuvent être omis. En particulier, les paramètres ctrl-in-trig, ctrl-in-trig-mode, ctrl-in-trig-pol, ctrl-out-mode et/ou ctrl-out-pol peuvent être prévus indépendamment du ou des paramètres ctrl-in-req, ctrl-in-req-mode, ctrl-in-req-pol, et inversement.

Bien que les paramètres ctrl-in-trig, ctrl-in-trig-mode, ctrl-in-trig-pol, ctrl-in-req, ctrl-in-req-mode, ctrl-in-req-pol, ctrl-out-mode et/ou ctrl-out-pol sont de préférence stockés dans un même registre, ou autrement dit proviennent d'un même champ d'un enregistrement d'une liste chaînée d'enregistrements, ces paramètres peuvent être stockés dans des registres différents.

Les modes de réalisation des figures 8, 9 et 10 peuvent être mis en oeuvre sans les bits U1 à U6. Dans ce cas, comme il n'y a pas de mise à jour conditionnelle des registres, chaque enregistrement de la liste chaînée contient autant de champs qu'il y a de registres.

On comprend de la description ci-dessus faite en relation avec les figures 7 à 10 que la condition ctrl-in est en fait au moins en partie déterminée par le paramètre ctrl-in-req et/ou au moins en partie déterminée par le paramètre ctrl-in-trig. En outre, le moment ou les moments de détection d'une condition ctrl-in, en particulier lors d'un transfert correspondant à plusieurs transferts similaires, sont au moins en partie déterminés par le paramètre ctrl-in-req-mode et/ou au moins en partie déterminés par le paramètre ctrl-in-trig-mode.

Le procédé de la figure 7 et les enregistrements décrits en relation avec les figures 1 à 5 peuvent être adaptés aux modes de réalisation et variantes décrits en relation avec les figures 8, 9 et 10, à partir des indications fonctionnelles données ci-dessus.

Le nombre de registres, le nombre de paramètres stockés par la banque de registres et/ou le nombre de paramètres stockés par chaque registre peuvent varier.

Par ailleurs, d'autres paramètres peuvent être prévus. Par exemple, dans le cas d'un transfert de données par accès direct en mémoire, un paramètre peut indiquer si les données et/ou les blocs de données du transfert correspondant à un enregistrement doivent être transférés au coup par coup ou par salve ("burst").

## Revendications

1. Mémoire (12) contenant au moins une liste chaînée d'enregistrements représentative de plusieurs transferts de données par un circuit (14) de contrôle d'accès direct en mémoire, chaque enregistrement (LLI-1, LLI-2, LLI-3) étant représentatif de paramètres (S@, D@, NB, BL, NLLI@, ctrl-in, ctrl-in-req, ctrl-in-trig, ctrl-in-trig-mode, ctrl-in-req-mode, ctrl-in-trig-pol, ctrl-out, ctrl-out-mode, ctrl-out-pol) d'un transfert de données correspondant parmi lesdits plusieurs transferts, les paramètres dudit transfert de données comprenant une condition de début (ctrl-in, ctrl-out, ctrl-in-req, ctrl-in-trig, ctrl-in-req-mode, ctrl-in-trig-mode, ctrl-in-trig-pol) dudit transfert de données et un événement de fin (ctrl-out, ctrl-out-mode, ctrl-out-pol) dudit transfert de données, dans laquelle la condition de début dudit transfert comprend et est au moins en partie déterminée par :
une identification (ctrl-in-req) d'un client dudit transfert identifiant un signal de requête provoquant ledit transfert ;
une indication (ctrl-in-req-mode) d'au moins un moment dudit transfert où une réception du signal de requête (ctrl-in-req) conditionne ledit transfert ;
une identification (ctrl-in-trig) d'un signal de début de transfert ; et
une indication (ctrl-in-trig-mode) soit que le transfert n'est pas conditionné par la détection d'une modification du signal de début de transfert, soit d'au moins un moment dudit transfert où une détection d'une modification du signal de début de transfert conditionne ledit transfert, et dans laquelle l'événement de fin de transfert (ctrl-out) comprend une indication (ctrl-out-mode) soit d'au moins un moment dudit transfert où l'événement doit être généré, soit que ledit événement n'est pas généré pendant ledit transfert, ledit événement étant une modification d'un signal de fin dudit transfert.

2. Mémoire selon la revendication 1, dans laquelle chaque enregistrement (LLI-1, LLI-2, LLI-3) contient un premier champ (C5) déterminant le nombre de champs (C1, C2, C3, C4, C5) de l'enregistrement suivant, chaque champ d'un enregistrement étant représentatif d'un contenu à programmer dans un registre (R1, R2, R3, R4, R5) d'une banque de registres du circuit (14) de contrôle d'accès direct en mémoire.

3. Mémoire selon la revendication 2, dans laquelle le premier champ (C5) détermine dans quels registres (R1, R2, R3, R4, R5) doivent être programmés lesdits contenus, le premier champ (C5) comprenant de préférence des bits (U1, U2, U3, U4, U5) dont chacun identifie un registre, les valeurs desdits bits déterminant les champs (C1, C2, C3, C4, C5) de l'enregistrement à programmer.

4. Mémoire selon l'une quelconque des revendications 1 à 3, dans laquelle, pour chaque enregistrement (LLI-1, LLI-2, LLI-3), les paramètres comprennent une indication que ledit transfert de données correspondant est un transfert d'une donnée, de plusieurs données, d'un bloc de données ou de plusieurs blocs de données.

5. Mémoire selon la revendication 4, dans laquelle ledit au moins un moment où une réception du signal de requête (ctrl-in-req) conditionne ledit transfert est sélectionné parmi : avant chaque transfert d'une donnée, uniquement avant le transfert de la première donnée, avant le transfert de chaque bloc de données et uniquement avant le transfert du premier bloc de données.

6. Procédé de transfert de données par accès direct en mémoire dans lequel des transferts de données sont effectués sur un canal d'un circuit (14) de contrôle d'accès direct en mémoire, chaque transfert de données sur ce canal étant paramétré par un enregistrement (LLI-1, LLI-2, LLI-3) correspondant d'une liste d'une mémoire (12) selon l'une quelconque des revendications 1 à 5.

7. Procédé selon la revendication 6, dans lequel chaque enregistrement (LLI-1, LLI-2, LLI-3) de la liste correspond à une mise à jour d'une banque de registres (R1, R2, R3, R4, R5) associée au canal.

8. Procédé selon la revendication 7, dans lequel un contenu courant de la banque de registres (R1, R2, R3, R4, R5) paramètre ledit transfert de données correspondant sur le canal.

9. Système électronique comprenant une mémoire (12) selon l'une quelconque des revendications 1 à 5, et un circuit de contrôle d'accès direct en mémoire (14) muni de plusieurs canaux dont chacun est associé à une banque de registres, le circuit étant configuré pour mettre en oeuvre le procédé selon l'une quelconque des revendications 6 à 8.

## Patentansprüche

1. Speicher (12), der mindestens eine verknüpfte Liste von Datensätzen enthält, die eine Vielzahl von Datenübertragungen durch eine Direktspeicherzugriffssteuerschaltung (14) darstellen, wobei jeder Datensatz (LLI-1, LLI-2, LLI-3) Parameter (S@, D@, NB, BL, NLLI@, ctrl-in, ctrl-in-req, ctrl-in-trig, ctrl-in-trig-mode, ctrl-in-req-mode, ctrl-in-trig-pol, ctrl-out, ctrl-out-mode, ctrl-out-pol) eines entsprechenden Datentransfers unter der Vielzahl von Datentransfers, wobei die Parameter des Datentransfers eine Startbedingung (ctrl-in, ctrl-out, ctrl-in-req, ctrl-in-trig, ctrl-in-req-mode, ctrl-in-trig-mode, ctrl-in-trig-pol) des Datentransfers und ein Endereignis (ctrl-out, ctrl-out-mode, ctrl-out-pol) des Datentransfers umfassen, wobei die Startbedingung des Transfers Folgendes aufweist und bestimmt wird durch:
eine Identifikation (ctrl-in-req) eines Clients der Übertragung, die ein die Übertragung auslösendes Anforderungssignal identifiziert;
eine Anzeige (ctrl-in-req-mode) mindestens eines Zeitpunkts der Übertragung, zu dem ein Empfang des Anforderungssignals (ctrl-in-req) die Übertragung bedingt;
eine Identifizierung (ctrl-in-trig) eines Übertragungsstartsignals; und
eine Anzeige (ctrl-in-trig-mode) entweder, dass die Übertragung nicht durch eine Änderung des Übertragungsstartsignals bedingt ist, oder mindestens eines Zeitpunkts der Übertragung, bei dem eine Erfassung einer Änderung des Übertragungsstartsignals die Übertragung bedingt, und wobei das Übertragungsende-Ereignis (ctrl-out) eine Anzeige (ctrl-out-mode) entweder mindestens eines Zeitpunkts der Übertragung aufweist, bei dem das Ereignis erzeugt werden sollte, oder dass das Ereignis während der Übertragung nicht erzeugt wird, wobei das Ereignis eine Änderung eines Endsignals der Übertragung ist.

2. Speicher nach Anspruch 1, wobei jeder Datensatz (LLI 1, LLI-2, LLI-3) ein erstes Feld (C5) enthält, das die Anzahl der Felder (C1, C2, C3, C4, C5) des nächsten Datensatzes bestimmt, wobei jedes Feld eines Datensatzes einen Inhalt darstellt, der in ein Register (R1, R2, R3, R4, R5) einer Registerbank der Direktspeicherzugriffssteuerschaltung (14) zu programmieren ist.

3. Speicher nach Anspruch 2, wobei das erste Feld (C5) bestimmt, in welche Register die Inhalte (R1, R2, R3, R4, R5) programmiert werden sollen, wobei das erste Feld (C5) vorzugsweise Bits (U1, U2, U3, U4, U5) aufweist, von denen jedes ein Register identifiziert, wobei die Werte der Bits die Felder (C1, C2, C3, C4, C5) des zu programmierenden Datensatzes bestimmen.

4. Speicher nach einem der Ansprüche 1 bis 3, wobei die Parameter für jeden Datensatz (LLI-1, LLI-2, LLI-3) eine Angabe enthalten, dass die entsprechende Datenübertragung eine Übertragung eines Teils der Daten, einer Vielzahl von Daten, eines Datenblocks oder einer Vielzahl von Datenblöcken ist.

5. Speicher nach Anspruch 4, wobei der mindestens eine Zeitpunkt, zu dem ein Empfang des Anforderungssignals (ctrl-in-req) die Übertragung bedingt, ausgewählt ist aus: vor jeder Datenübertragung, nur vor der Übertragung des ersten Teils der Daten, vor der Übertragung jedes Datenblocks und nur vor der Übertragung des ersten Datenblocks.

6. Verfahren zur Datenübertragung durch direkten Speicherzugriff, bei dem Datenübertragungen auf einem Kanal einer Direktspeicherzugriffssteuerschaltung (14) durchgeführt werden, wobei jede Datenübertragung auf diesem Kanal durch einen entsprechenden Datensatz (LLI-1, LLI-2, LLI-3) einer Liste des Speichers (12) nach einem der Ansprüche 1 bis 5 parametrisiert wird.

7. Verfahren nach Anspruch 6, wobei jeder Datensatz (LLI-1, LLI-2, LLI-3) in der Liste einer Aktualisierung einer Registerbank (R1, R2, R3, R4, R5) entspricht, die dem Kanal zugeordnet ist.

8. Verfahren nach Anspruch 7, wobei ein aktueller Inhalt der Registerbank (R1, R2, R3, R4, R5) die entsprechende Datenübertragung auf dem Kanal parametrisiert.

9. Elektronisches System mit dem Speicher (12) nach einem der Ansprüche 1 bis 5 und einer Direktspeicherzugriffssteuerschaltung (14), die mit einer Vielzahl von Kanälen versehen ist, von denen jeder einer Registerbank zugeordnet ist, wobei die Schaltung so konfiguriert ist, dass sie das Verfahren nach einem der Ansprüche 6 bis 8 implementiert.

## Claims

1. A memory (12) containing at least one linked list of records representative of a plurality of data transfers by a direct memory access control circuit (14), each record (LLI-1, LLI-2, LLI-3) being representative of parameters (S@, D@, NB, BL, NLLI@, ctrl-in, ctrl-in-req, ctrl-in-trig, ctrl-in-trig-mode, ctrl-in-req-mode, ctrl in-trig-pol, ctrl-out, ctrl-out-mode, ctrl-out-pol) of a corresponding data transfer among said plurality of data transfers, the parameters of said data transfer comprising a start condition (ctrl-in, ctrl-out, ctrl-in-req, ctrl-in-trig, ctrl-in req-mode, ctrl-in-trig-mode, ctrl-in-trig-pol) of said data transfer and an end event (ctrl-out, ctrl-out-mode, ctrl-out pol) of said data transfer, wherein the start condition of said transfer comprises and is determined by:
an identification (ctrl-in-req) of a client of said transfer identifying a request signal causing said transfer;
an indication (ctrl-in-req-mode) of at least one time of said transfer where a reception of the request signal (ctrl-in-req) conditions said transfer;
an identification (ctrl-in-trig) of a transfer start signal; and
an indication (ctrl-in-trig-mode) either that the transfer is not conditioned by a change of the transfer start signal, or of at least one time of said transfer where a detection of a change of the transfer start signal conditions said transfer, and wherein the transfer end event (ctrl-out) comprises an indication (ctrl-out-mode) either of at least one time of said transfer where the event should be generated, or that said event is not generated during said transfer, said event being a change of an end signal of said transfer.

2. The memory of claim 1, wherein each record (LLI 1, LLI-2, LLI-3) contains a first field (C5) determining the number of fields (C1, C2, C3, C4, C5) of the next record, each field of a record being representative of a content to be programmed in a register (R1, R2, R3, R4, R5) of a register bank of the direct memory access control circuit (14).

3. The memory of claim 2, wherein the first field (C5) determines in which registers said contents (R1, R2, R3, R4, R5) should be programmed, the first field (C5) preferably comprising bits (U1, U2, U3, U4, U5), each of which identifies a register, the values of said bits determining the fields (C1, C2, C3, C4, C5) of the record to be programmed.

4. The memory of any of claims 1 to 3, wherein, for each record (LLI-1, LLI-2, LLI-3), the parameters comprise an indication that said corresponding data transfer is a transfer of a piece of data, of a plurality of data, of a data block, or of a plurality of data blocks.

5. The memory of claim 4, wherein said at least one time where a reception of the request signal (ctrl-in-req) conditions said transfer is selected among: before each data transfer, only before the transfer of the first piece of data, before the transfer of each data block, and only before the transfer of the first data block.

6. A method of data transfer by direct memory access, wherein data transfers are performed on a channel of a direct memory access control circuit (14), each data transfer on this channel being parameterized by a corresponding record (LLI-1, LLI-2, LLI-3) of a list of the memory (12) of any of claims 1 to 5.

7. The method of claim 6, wherein each record (LLI-1, LLI 2, LLI-3) in the list corresponds to an update of a register bank (R1, R2, R3, R4, R5) associated with the channel.

8. The method of claim 7, wherein a current content of the register bank (R1, R2, R3, R4, R5) parameterizes said corresponding data transfer on the channel.

9. An electronic system comprising the memory (12) of any of claims 1 to 5, and a direct memory access control circuit (14) provided with a plurality of channel, each of which is associated with a register bank, the circuit being configured to implement the method of any of claims 6 to 8 .
